# EUROPEAN PATENT APPLICATION

(11) **EP 4 607 864 A1**
(43) Date of publication of application: **27.08.2025**
(21) Application number: 25157687.2
(22) Date of filing: 13.02.2025
(51) Int. Cl.: H04L 25/49, H04L 5/14

(54) **FULL-DUPLEX SCHEME FOR ASYMMETRIC COMMUNICATION LINKS USING ZERO-DISPARITY MODULATION**

(30) Priority: 23.02.2024 US 202463557119 P
(71) Applicant: Marvell Asia Pte Ltd, Singapore 369522 (SG)
(72) Inventor: Jonsson, Ragnar Hlynur, Aliso Viejo, CA 92656 (US); Majomard, Seid Alireza Razavi, Belmont, CA 94002 (US); Barkeshli, Sina, Saratoga, CA 95070 (US)
(74) Representative: Grünecker Patent- und Rechtsanwälte PartG mbB

(57) **Abstract**

An Ethernet physical layer (PHY) device, for use in an automotive network, includes a cable interface, a transmitter and a receiver. The cable interface is configured to connect to an Ethernet cable. The transmitter is configured to generate an outbound signal by modulating outbound data with a zero-disparity modulation at a first data rate, and to transmit the outbound signal to the Ethernet cable via the cable interface. The receiver is configured to receive, from the Ethernet cable via the cable interface, an inbound signal having a second data rate that is lower than the first data rate, the inbound signal at least partially overlapping the outbound signal in spectrum, and to demodulate the inbound signal to produce inbound data.

## Description

### CROSS-REFERENCE TO RELATED APPLICATIONS

This application claims the benefit of U.S. Provisional Patent Application 63/557,119, filed February 23, 2024, whose disclosure is incorporated herein by reference.

### FIELD OF THE DISCLOSURE

The present disclosure relates generally to digital communication, and particularly to methods and systems for full-duplex communication using zero-disparity modulation.

### BACKGROUND

Various communication systems and applications involve bidirectional communication with asymmetric data rates, in which data rates for upstream communications differ from data rates for downstream communications. For example, a communication link between a video camera and a controller typically conveys a high-data-rate signal that conveys sensor data from the camera to the controller, and a low-data-rate signal that conveys control data from the controller to the camera. Another example of an asymmetric communication link is a link connecting a processor and a display. In such a link, the data rate from the processor to the display is typically much higher than the data rate in the opposite direction.

The description above is presented as a general overview of related art in this field and should not be construed as an admission that any of the information it contains constitutes prior art against the present patent application.

### SUMMARY

An embodiment that is described herein provides an Ethernet physical layer (PHY) device for use in an automotive network. The Ethernet PHY device includes a cable interface, a transmitter and a receiver. The cable interface is configured to connect to an Ethernet cable. The transmitter is configured to generate an outbound signal by modulating outbound data with a zero-disparity modulation at a first data rate, and to transmit the outbound signal to the Ethernet cable via the cable interface. The receiver is configured to receive, from the Ethernet cable via the cable interface, an inbound signal having a second data rate that is lower than the first data rate, the inbound signal at least partially overlapping the outbound signal in spectrum, and to demodulate the inbound signal to produce inbound data.

In some embodiments, the transmitter is configured to obtain the outbound data from one or more sensors, and the receiver is configured to receive, in the inbound signal, control data for controlling the one or more sensors.

In a disclosed embodiment, the transmitter is configured to modulate the outbound data using bipolar Non-Return-to-Zero (NRZ) modulation. In another embodiment, the transmitter is configured to modulate the outbound data using Manchester-code modulation.

In yet another embodiment, the transmitter is configured to modulate the outbound data using Pulse-Amplitude Modulation (PAM) to produce a PAM signal, and to filter the PAM signal with a High-Pass Filter (HPF). In some embodiments, the receiver is configured to demodulate the inbound signal using a zero-disparity decoder.

There is additionally provided, in accordance with an embodiment that is described herein, an Ethernet physical layer (PHY) device for use in an automotive network. The Ethernet PHY device includes a cable interface, a receiver and a transmitter. The cable interface is configured to connect to an Ethernet cable. The receiver is configured to receive, from the Ethernet cable via the cable interface, an inbound signal that is modulated with a zero-disparity modulation at a first data rate, and to demodulate the inbound signal to produce inbound data. The transmitter is configured to generate an outbound signal by modulating outbound data at a second data rate that is lower than the first data rate, the outbound signal at least partially overlapping the inbound signal in spectrum, and to transmit the outbound signal to the Ethernet cable via the cable interface.

In some embodiments, the receiver is configured to receive, in the inbound data, sensor data originating from one or more sensors, and the transmitter is configured to transmit, in the outbound data, control data for controlling the one or more sensors.

In an embodiment, the receiver is configured to demodulate the inbound signal using a bipolar Non-Return-to-Zero (NRZ) decoder. In another embodiment, the receiver is configured to demodulate the inbound signal using a Manchester-code decoder. In yet another embodiment, the receiver is configured to demodulate the inbound signal using a Pulse-Amplitude Modulation (PAM) decoder. In a disclosed embodiment, the transmitter is configured to modulate the outbound data with an outbound zero-disparity modulation.

There is also provided, in accordance with an embodiment that is described herein, a method for communication in an Ethernet physical layer (PHY) device in an automotive network. The method includes generating an outbound signal by modulating outbound data with a zero-disparity modulation at a first data rate, and transmitting the outbound signal to an Ethernet cable. An inbound signal is received from the Ethernet cable. The inbound signal has a second data rate that is lower than the first data rate. The inbound signal at least partially overlaps the outbound signal in spectrum. The inbound signal is demodulated to produce inbound data.

There is further provided, in accordance with an embodiment that is described herein, a method for communication in an Ethernet physical layer (PHY) device in an automotive network. The method includes receiving, from an Ethernet cable, an inbound signal that is modulated with a zero-disparity modulation at a first data rate, and demodulating the inbound signal to produce inbound data. An outbound signal is generated by modulating outbound data at a second data rate that is lower than the first data rate. The outbound signal at least partially overlaps the inbound signal in spectrum. The outbound signal is transmitted to the Ethernet cable.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates an asymmetric automotive Ethernet link, in accordance with an embodiment that is described herein;
Fig. 2 is a block diagram that schematically illustrates an internal configuration of a camera-side physical Layer (PHY) device in the link of Fig. 1, in accordance with an embodiment that is described herein;
Fig. 3 is a flow chart that schematically illustrates a method for asymmetric Ethernet communication, in accordance with an embodiment that is described herein;
Fig. 4 is a block diagram that schematically illustrates a Low-Speed (LS) receiver in the camera-side PHY device of Fig. 1, in accordance with an embodiment that is described herein;
Fig. 5 is a block diagram that schematically illustrates a High-Speed (HS) transmitter in the camera-side PHY device of Fig. 1, in accordance with an embodiment that is described herein;
Fig. 6 is a block diagram that schematically illustrates a camera-side PHY device, in accordance with an embodiment that is described herein;
Fig. 7 is a block diagram that schematically illustrates a central (switch-side) PHY device, in accordance with an embodiment that is described herein;
Fig. 8 is a block diagram that schematically illustrates a camera-side PHY device, in accordance with an alternative embodiment that is described herein; and
Fig. 9 is a graph illustrating spectra of HS and LS signals in the camera-side PHY device of Fig. 8, in accordance with an alternative embodiment that is described herein.

### DETAILED DESCRIPTION OF EMBODIMENTS

Embodiments that are described herein provide improved techniques for multiplexing signals transmitted in opposite directions over a shared communication link. The embodiments disclosed herein are described mainly in the context of an asymmetric Ethernet link that connects a camera or other sensor to a switch or other central controller in an automotive Ethernet communication system. This choice, however, is made solely by way of example. In alternative embodiments, the disclosed techniques can be used in any other suitable system, application and/or with any other suitable communication protocol involving asymmetric communication. Non-limiting examples of alternative applications include industrial and enterprise networks.

In some embodiments, an automotive Ethernet communication link comprises two Ethernet physical layer (PHY) devices that communicate over an Ethernet cable. One PHY device is connected to a camera or other sensor, and is referred to as a "camera-side" or "sensor-side" PHY device. The other PHY device is connected to a switch or central controller, and is referred to as a "switch-side" or "central" PHY device. The Ethernet signal transmitted by the camera-side PHY device is referred to as a "High-Speed" (HS) signal, and the Ethernet signal transmitted by the switch-side PHY device is referred to as a "Low-Speed" (LS) signal. In one example embodiment, the data rate of the HS signal is 5Gbps, while the data rate of the LS signal is 100Mbps.

In the disclosed embodiments, the HS PHY device and the LS PHY device transmit the HS signal and the LS signal concurrently over the cable. The LS signal has a considerably narrower spectrum than the HS signal. When both signals are transmitted concurrently, the spectrum of the LS signal typically overlaps the lower part of the spectrum of the HS signal. Unless accounted for, the overlap in spectrum may cause interference between the two signals.

In some embodiments, the interference between the HS signal and the LS signal is reduced by proper design of the modulation scheme of the HS signal. In the embodiments described herein, the HS signal is modulated using a zero-disparity modulation. In the present context, the term "zero-disparity modulation" refers to a modulation scheme in which the modulated signal has a spectral notch in the vicinity of zero frequency (0 Hz, also referred to as "Direct Current" - DC) . Equivalently, the term "zero-disparity modulation" can be defined as a modulation scheme in which the modulated signal has an average amplitude of zero (or that approaches zero). One example of zero-disparity modulation is bipolar Non-Return-to-Zero (bipolar NRZ). Another example is Manchester-code modulation. Yet another example is Pulse-Amplitude Modulation (PAM) followed by High-Pass Filtering (HPF). All three examples are described in detail below. Alternatively, any other suitable zero-disparity modulation can be used.

When using zero-disparity modulation for the HS signal, the spectrum of the LS signal falls in a spectral region in which the HS signal has very low power content. As a result, interference in both directions (interference from the LS signal to demodulation of the HS signal, and interference from the HS signal to demodulation of the LS signal) is reduced considerably.

The disclosed multiplexing scheme is superior to conventional schemes such as Frequency-Division Multiplexing (FDD) and Time-Division Multiplexing (TDD), for example with regards to the cost, size and simplicity of design of the PHY devices. Unlike FDD, the disclosed multiplexing scheme uses the spectral shapes of the signals to distinguish between the signals transmitted in the two link directions, and therefore obviates the need for strict frequency separation and filtering between the HS signal and the LS signal. Unlike TDD, the multiplexing scheme described herein enables continuous concurrent transmission of the two signals ("full-duplex") and has no need for switching and timing circuitry. Moreover, the low levels of interference between the HS signal and the LS signal eliminate the need for echo cancellation in the PHY devices. The disclosed PHY devices are therefore simpler to implement and have low cost, size and power consumption.

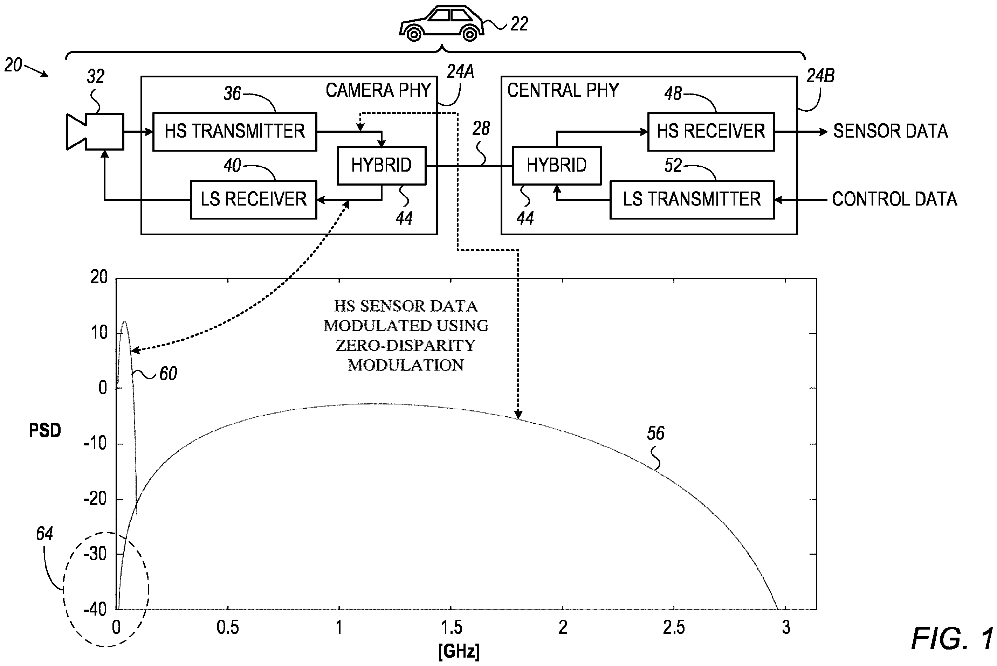

Fig. 1 is a block diagram that schematically illustrates an asymmetric automotive Ethernet link 20, in accordance with an embodiment that is described herein. Link 20 is typically installed in a vehicle 22, as part of an automotive Ethernet communication system. In alternative embodiments, link 20 may be used in any other suitable system or application such as industrial or enterprise networks. Link 20 comprises a pair of Ethernet PHY devices 24A and 24B that communicate over an Ethernet cable 28. Cable 28 may comprise, for example, a twisted-pair automotive Ethernet cable or any other suitable medium that is shared between both transmission directions of the link.

In the present example, PHY device 24A ("camera-side PHY") is connected locally to a camera 32, and PHY device 24B ("central PHY") is connected locally to a port of a switch or central controller. PHY device 24A receives sensor data (e.g., video data) from camera 32, generates a HS signal that conveys the sensor data, and transmits the HS signal over cable 28 to PHY device 24B. PHY device 24B receives control data for controlling camera 32, e.g., from the central controller, generates a LS signal that conveys the control data, and transmits the LS signal over cable 28 to PHY device 24A.

In the embodiment of Fig. 1, camera-side PHY device 24A comprises a HS transmitter 36, a LS receiver 40, and a hybrid 44. Hybrid 44 serves as a cable interface for both transmission and reception. HS transmitter 36 obtains the sensor data from camera 32, generates the HS signal (including modulating the sensor data using zero-disparity modulation as described below), and transmits the HS signal via hybrid 44 over cable 28. LS receiver 40 receives the LS signal from the cable via hybrid 44, demodulates the LS signal and forwards the control data to camera 32.

In the example of Fig. 1, central PHY device 24B comprises a HS receiver 48, a LS transmitter 52, and a hybrid 44. HS receiver 48 receives the HS signal from cable 28 via hybrid 44, demodulates the HS signal and forwards the sensor data to its locally connected switch or central controller. LS transmitter 52 obtains the control data from the switch or central controller, generates the LS signal, and transmits the LS signal via hybrid 44 over cable 28.

A graph at the bottom of Fig. 1 illustrates the spectra of the HS and LS signals, in an embodiment. The vertical axis denotes Power Spectral Density (PSD) in arbitrary logarithmic units. The horizontal axis denotes frequency in GHz. A plot 56 shows the spectrum of the HS signal transmitted by HS transmitter 36 (in camera-side PHY device 24A). A plot 60 shows the spectrum of the LS signal transmitted by LS transmitter 52 (in central PHY device 24B).

As seen, the HS signal and the LS signal partially overlap in spectrum: Spectrum 60 of the LS signal coincides with the lower part of spectrum 56 of the HS signal. To reduce the level of interference between the two signals, given the partial overlap, the modulation scheme used in the HS signal has a spectral notch 64 in the vicinity of DC (zero frequency). Notch 64 is achieved by modulating the sensor data using zero-disparity modulation in which the DC component typically diminishes to zero. In various embodiments, HS transmitter 36 may modulate the sensor data using any suitable type of zero-disparity modulation.

In one embodiment, HS transmitter 36 modulates the sensor data using bipolar NRZ modulation. In bipolar NRZ, the modulator receives a sequence of "0" and "1" bits. The "0" bits are mapped to a symbol value of zero. The "1" bits in the sequence are mapped alternately to +V and to -V. When averaged (e.g., integrated) over time, the average amplitude of the modulated signal approaches zero.

In another embodiment, HS transmitter 36 modulates the sensor data using Manchester-code modulation. In Manchester-code modulation, each individual symbol is positive during part of the symbol interval and negative during the rest of the symbol interval, so that the average amplitude of each symbol is zero. In one example, a bit value of "0" is mapped to a symbol that equals +V during the first half of the symbol interval, and transitions to -V in the second half of the symbol interval. A bit value of "1" is mapped to a symbol that equals -V during the first half of the symbol interval, and transitions to +V in the second half of the symbol interval.

In the frequency domain, the spectrum of both bipolar NRZ and Manchester-code modulation have a spectral notch similar to notch 64 in the vicinity of DC (since the average signal amplitude is substantially zero). This property reduces the interference between the HS signal and the LS signal.

In various embodiments, LS transmitter 52 (in central PHY device 24B) may use various types of modulation for modulating the control data to generate the LS signal. The modulation used for the LS signal may be but is not necessarily zero-disparity modulation. For example, in some embodiments LS transmitter 52 may use PAM (e.g., PAM-2 or PAM-4) for generating the LS signal. Alternatively, however, in some embodiments LS transmitter 52 may use zero-disparity modulation for the LS signal, as well. This implementation is useful, for example, as it reduces baseline wander effects in which the baseline level of the signal changes slowly over time. In the non-limiting example of Fig. 1, spectrum 60 is also seen to have a spectral notch at DC, caused by the use of zero-disparity modulation by LS transmitter 52.

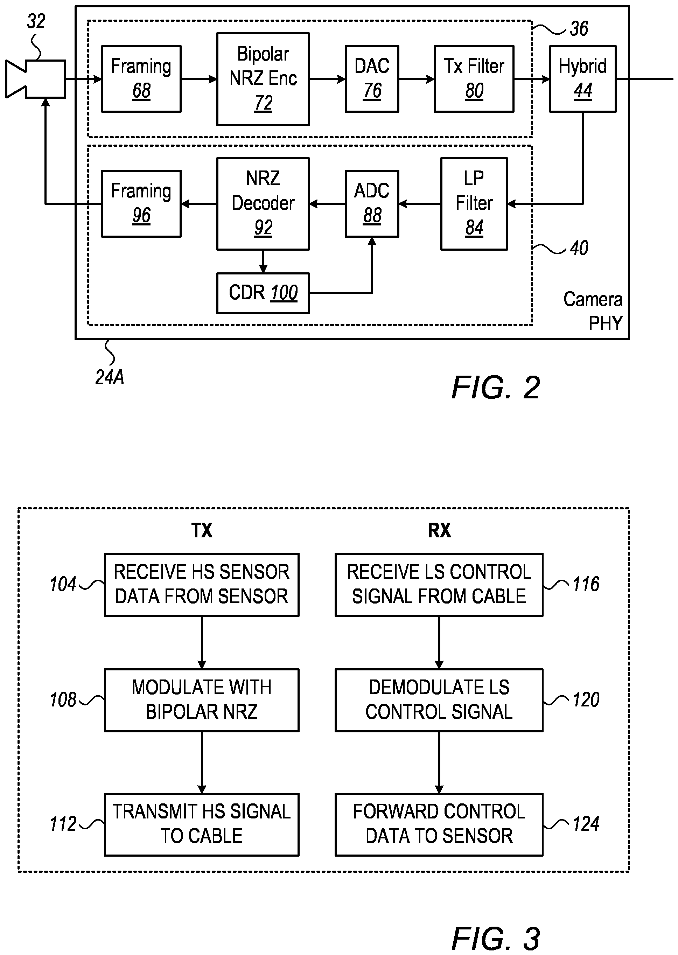

Fig. 2 is a block diagram that schematically illustrates the internal configuration of camera-side PHY device 24A, in accordance with an embodiment that is described herein.

In the present example, HS transmitter 36 comprises a framing module 68, a bipolar NRZ encoder 72, a Digital-to-Analog Converter (DAC) 76 and a transmit (Tx) filter 80. Framing module 68 formats the sensor data into frames, in some embodiments including calculation of Forward Error Correction (FEC) and Cyclic Redundancy Check (CRC) bits. Encoder 72 encodes the resulting bit stream with bipolar NRZ (i.e., maps the "0" bits to "0"s, and the "1" bits to "1" and "-1" alternately) . DAC 76 converts the output of encoder 72 into an analog signal having three analog values {-V,0,+V}. Tx filter 80 filters the output of DAC 76. The resulting HS signal is transmitted over cable 28 via hybrid 44.

In the example of Fig. 2, LS receiver 40 comprises a Low-Pass (LP) filter 84, an Analog-to-Digital Converter (ADC) 88, an NRZ decoder 92, a framing module 96, and a Clock-Data Recovery (CDR) module 100. LP filter 84 applies low-pass filtering to the LS signal received from cable 28 via hybrid 44.

The spectral response of LP filter 84 is designed to pass the spectrum of the LS signal (e.g., spectrum 60 of Fig. 1), while suppressing most of the spectrum of the HS signal (e.g., spectrum 56 of Fig. 1). As explained above, spectral notch 64 reduces the amount of power of the HS signal that overlaps the LS signal. Combined with the low-pass filtering of LP filter 84, the amount of energy of the HS signal that leaks into LS receiver 40 is minimal. As a result, the interference caused by transmission of the HS signal to reception of the LS signal is minimized.

ADC 88 digitizes the filtered signal at the output of LP filter 84. NRZ decoder 92 decodes the digitized signal. Framing module 96 decodes and removes the FEC and CRC bits. The resulting control data is delivered to camera 32. CDR module 100 reconstructs the clock of the LS signal and controls the sampling clock of ADC 88.

Fig. 3 is a flow chart that schematically illustrates a method for asymmetric Ethernet communication, in accordance with an embodiment that is described herein. The method focuses on the operation of camera-side PHY device 24A. The left-hand side of the figure shows the operations relating to transmission of the HS signal. The right-hand side of the figure shows the operations relating to reception of the LS signal.

At a sensor-data reception operation 104, HS transmitter 36 receives sensor data from camera 32. At a modulation operation 108, HS transmitter 36 modulates the sensor data with bipolar NRZ modulation. At a transmission operation 112, HS transmitter 36 transmits the HS signal to cable 28.

At a control-signal reception operation 116, LS receiver 40 receives the LS signal from cable 28. At a demodulation operation 120, LS receiver 40 demodulates the LS signal so as to reproduce the control data. At a forwarding operation 124, LS receiver 40 forwards the control data to camera 32.

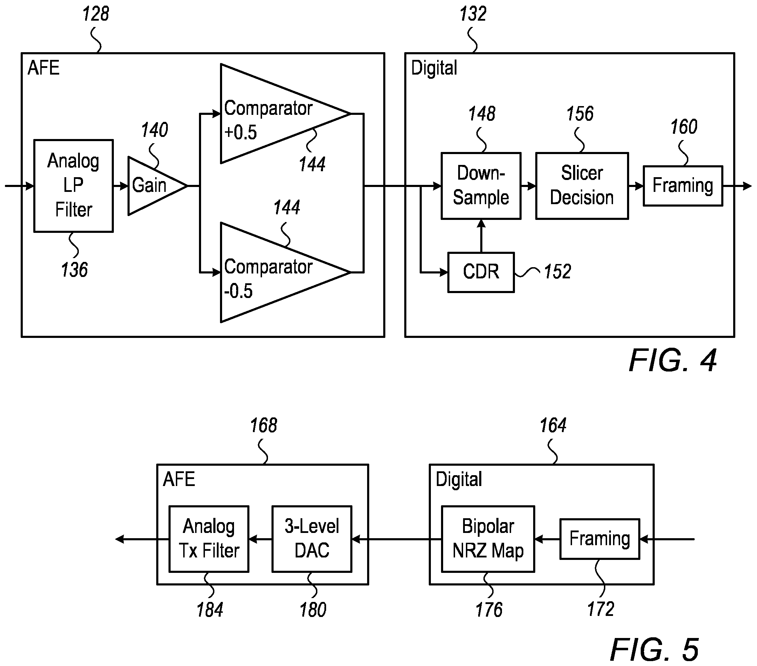

Fig. 4 is a block diagram that schematically illustrates the internal structure of a LS receiver in camera-side PHY device 24A, in accordance with another embodiment that is described herein. In the present example, the LS signal is modulated using bipolar NRZ modulation, as well. The example LS receiver of Fig. 4 comprises an Analog Front-End (AFE) 128 followed by a digital processor 132. AFE 128 comprises an analog LP filter 136, a gain block 140 and a pair of comparators 144. Digital block 132 comprises a down-sampler 148, a slicer (also referred to as a decision circuit) 156, a framing module 160, and a Clock-Data Recovery (CDR) module 152.

LP filter 136 applies low-pass filtering to the LS signal received from cable 28 (similarly to LP filter 84 of Fig. 2). As explained above, this filtering removes the vast majority of the energy of the HS signal that may leak into the LS receiver.

Gain block 140 amplifies the filtered LS signal to the proper level expected by comparators 144. Comparators 144 compare the level of the LS signal to - 0.5 and to +0.5. The outputs of the two comparators are summed together. The resulting signal, at the output of AFE 128, is a sequence of analog values that takes three possible values {-V,0,+V} in accordance with the bipolar modulation of the LS signal.

Down-sampler 148 samples the output of AFE 128 at a rate of one sample per symbol (i.e., at the symbol rate of the LS signal). Slicer 156 decides, for each sample produced by down-sampler 148, whether the sample represents "1", "0" or "-1". Framing module 160 operates similarly to framing module 96 of Fig. 2.

Fig. 5 is a block diagram that schematically illustrates the internal structure of a HS transmitter in camera-side PHY device 24A, in accordance with another embodiment that is described herein. In this implementation, the HS transmitter comprises a digital processor 164 followed by an AFE 168. Digital processor 164 comprises a framing module 172 and a bipolar NRZ mapper 176. AFE 168 comprises a 3-level DAC 180 and an analog Tx filter 184.

Framing module 172 receives the sensor data from camera 32 and frames the data, similarly to framing module 68 of Fig. 2. Mapper 176 maps the framed sensor data into a sequence of {-1,0,1} values in accordance with bipolar NRZ, in an embodiment. DAC 180 converts the {-1,0,1} values into respective analog values. Tx filter 185 filters the output of DAC 180, similarly to filter 80 of Fig. 2. The resulting HS signal is transmitted over cable 28 via hybrid 44. In alternative embodiments, other suitable types of HS modulation can be used, and the HS transmitter may have any other suitable configuration.

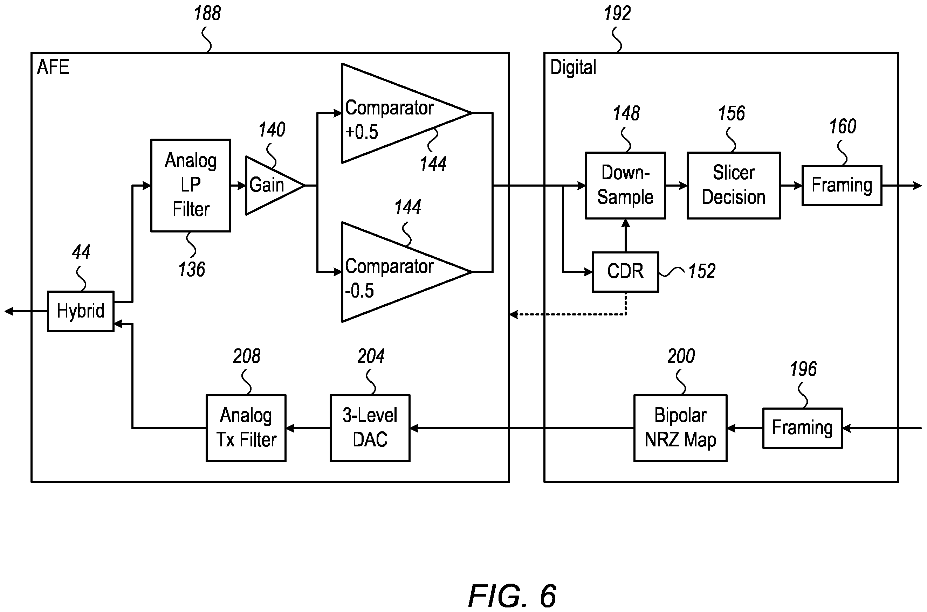

Fig. 6 is a block diagram that schematically illustrates a camera-side PHY device, in accordance with an embodiment that is described herein. The camera-side PHY device of Fig. 6 comprises an AFE 188 and a digital processor 192. In addition to a hybrid 44, AFE 188 comprises transmission circuitry that is similar to AFE 128 of Fig. 4 (comprising a LP filter 136, a gain block 140 and comparators 144), and reception circuitry that is similar to AFE 168 of Fig. 5 (comprising a 3-level DAC 204 and an analog TX filter 208). Digital processor 192 comprises transmission circuitry that is similar to digital processor 132 of Fig. 4 (comprising a down-sampler 148, a slicer 156, a framing module 160 and a CDR module 152), and reception circuitry that is similar to digital processor 164 of Fig. 5 (comprising a framing module 196 and a bipolar NRZ mapper 200).

In the configuration of Fig. 6, the transmission clock may be independent of the reception clock.

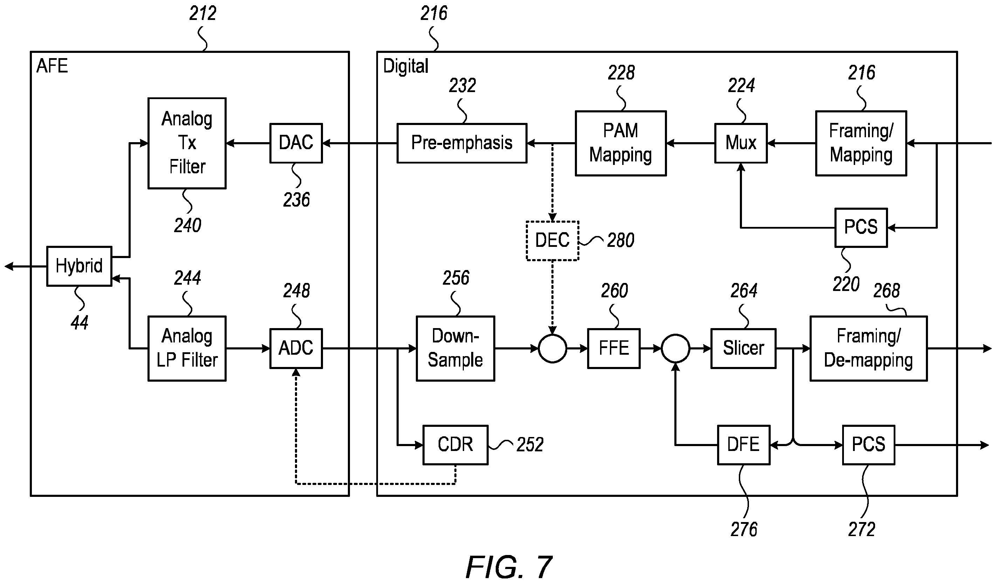

Fig. 7 is a block diagram that schematically illustrates the internal structure of central PHY device 24B, in accordance with an embodiment that is described herein. PHY device 24B comprises an AFE 212 and a digital processor 216. In the present example, the LS signal is modulated using conventional PAM, while the HS signal is modulated using bipolar NRZ.

The transmission circuitry in digital processor 216 comprises a framing/mapping module 216 and a Physical Coding Sub-layer (PCS) module 220, whose outputs are multiplexed by a multiplexer 224. Framing/mapping module 216 receives a bit stream as input and generates a higher rate bit stream according to bipolar NRZ. In an embodiment, framing/mapping module 216 repeats incoming "1" bits as "+3" and "-3", and converts incoming "0" bits into an alternating sequence of "+1"s and "-1"s.

A PAM mapping module outputs a sequence of digital PAM symbols of the LS signal. A pre-emphasis filter 232 filters the sequence of PAM symbols. In an embodiment, pre-emphasis filter 232 comprises an even-length symmetric LP filter that converts the sequence of "+1"s and "-1"s to zero. The transmission circuitry in AFE 212 comprises a DAC 236 that converts the digital PAM signal into an analog PAM signal, and an analog Tx filter 240 that filters the analog PAM signal. The output of filter 240 is transmitted via hybrid 44 to cable 28.

The reception circuitry in AFE 212 comprises an analog LP filter 244 that filters the HS signal received via hybrid 44 from cable 28. An ADC 248 digitizes the HS signal. In digital processor 216, the reception circuitry comprises a CDR module 252 that recovers the HS signal clock and controls the sampling clock of ADC 248. A down-sampler 256 reduces the rate of the digitized HS signal to one sample per symbol. A Feed-Forward Equalizer (FFE) 260 and a Decision-Feedback Equalizer (DFE) 276 equalize the signal. Equalizers 260 and 276 typically comprise digital filters having adaptive coefficients (taps). Alternatively, other suitable types of equalizers can be used. A slicer 264 makes bit decisions. A framing and de-mapping module 268 and a PCS module extract and output the sensor data.

In some embodiments, a Digital Echo Cancellation (DEC) module 280 cancels echoes of the transmitted LS signals from the received HS signal. In alternative embodiments, analog echo cancellation can be used. In yet other embodiments, the reception performance of PHY device 24B is sufficient without echo cancellation, and echo cancellation module 280 is omitted.

Central PHY device 24B of Fig. 7 can be implemented while making use of certain elements of a conventional IEEE 802.2ch-compatible PHY device. Certain blocks (e.g., framing modules 216 and 268 and mux 224) may be new, while other elements may need slight modification. In some embodiments, certain elements (e.g., analog LP filter 244 and/or DFE 276) can be omitted. In the configuration of Fig. 7, the transmission clock and the reception clock may be locked to one another.

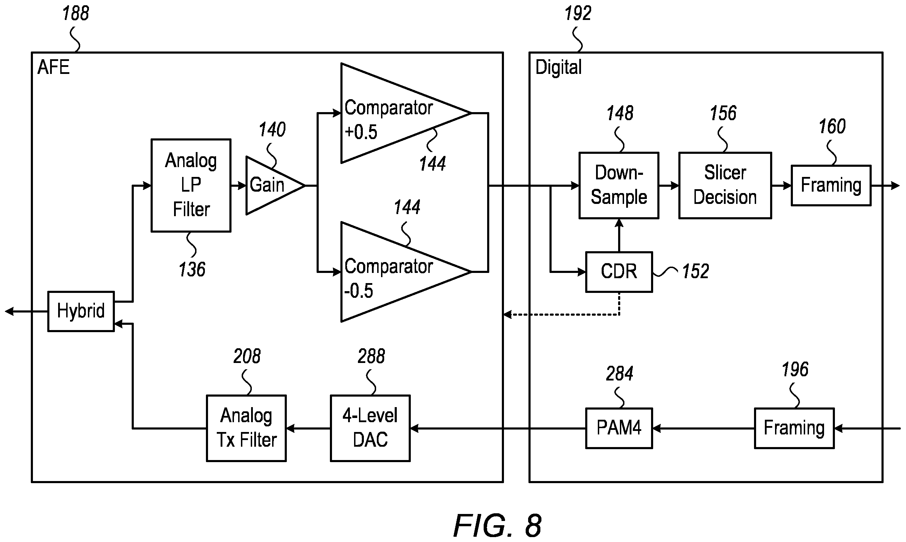

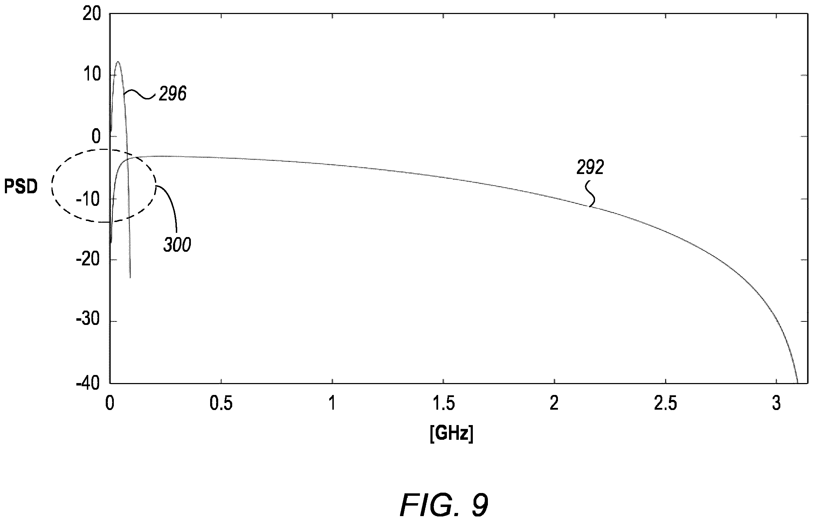

Fig. 8 is a block diagram that schematically illustrates a camera-side PHY device, in accordance with an alternative embodiment that is described herein. In this example, the HS signal is modulated using PAM-4, and the spectral notch in the vicinity of DC is produced by analog filtering of the PAM-4 signal. The resulting signal spectrum is illustrated in Fig. 9 below. Alternatively, digital filtering can be used.

In the present example, the internal structure of PHY device 24A is similar to that of Fig. 6 above. The PHY device of Fig. 8 differs from that of Fig. 6 in the following:
▪ Digital processor 192 comprises a PAM-4 mapper 284 instead of bipolar NRZ mapper 200.
▪ AFE 188 comprises a 4-level DAC 288 instead of 3-level DAC 204.

In some embodiments, when using PAM-4 modulation followed by high-pass filtering for the HS signal, central PHY device 24B can be similar to that of Fig. 7 above.

Fig. 9 is a graph illustrating spectra of the transmitted HS signal and the received LS signal in the camera-side PHY device of Fig. 8, in accordance with an alternative embodiment that is described herein. The vertical axis denotes Power Spectral Density (PSD) in arbitrary logarithmic units. The horizontal axis denotes frequency. A plot 292 shows the spectrum of the HS signal transmitted by the HS transmitter 36. A plot 296 shows the spectrum of the LS signal received by the LS receiver. As seen, spectrum 292 of the HS signal has a spectral notch 300 in the vicinity of zero frequency. This notch is created by the high-pass filtering operation of analog Tx filter 208 (Fig. 8).

The configurations of the various communication links and PHY devices shown in Figs. 1-8, and their components such as the HS and LS transmitters and receivers, are example configurations that are depicted solely for the sake of clarity. In alternative embodiments, any other suitable configurations can be used.

The various elements of the disclosed communication links and PHY devices may be implemented using dedicated hardware or firmware, such as using hardwired or programmable logic, e.g., in one or more Application-Specific Integrated Circuits (ASIC) or Field-Programmable Gate Arrays (FPGA). Additionally, or alternatively, certain elements of the disclosed communication links and PHY devices may be implemented in software and/or using a combination of hardware and software elements. Elements that are not mandatory for understanding of the disclosed techniques have been omitted from the figure for the sake of clarity.

In some embodiments, certain functions of the disclosed communication links and PHY devices may be implemented in one or more programmable processors, e.g., one or more Central Processing Units (CPUs) or microcontrollers, which are programmed in software to carry out the functions described herein. The software may be downloaded to any of the processors in electronic form, over a network, for example, or it may, alternatively or additionally, be provided and/or stored on non-transitory tangible media, such as magnetic, optical, or electronic memory.

Although the embodiments described herein mainly address automotive Ethernet links, the methods and systems described herein can also be used in other applications involving bidirectional communication with asymmetric data rates.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

**The following is a list of further preferred embodiments of the invention:**
Embodiment 1. An Ethernet physical layer (PHY) device for use in an automotive network, the Ethernet PHY device comprising:
   a cable interface, configured to connect to an Ethernet cable;
   a transmitter, configured to generate an outbound signal by modulating outbound data with a zero-disparity modulation at a first data rate, and to transmit the outbound signal to the Ethernet cable via the cable interface; and
   a receiver, configured to receive, from the Ethernet cable via the cable interface, an inbound signal having a second data rate that is lower than the first data rate, the inbound signal at least partially overlapping the outbound signal in spectrum, and to demodulate the inbound signal to produce inbound data.
Embodiment 2. The Ethernet PHY device according to embodiment 1, wherein the transmitter is configured to obtain the outbound data from one or more sensors, and wherein the receiver is configured to receive, in the inbound signal, control data for controlling the one or more sensors.
Embodiment 3. The Ethernet PHY device according to embodiment 1, wherein the transmitter is configured to modulate the outbound data using bipolar Non-Return-to-Zero (NRZ) modulation.
Embodiment 4. The Ethernet PHY device according to embodiment 1, wherein the transmitter is configured to modulate the outbound data using Manchester-code modulation.
Embodiment 5. The Ethernet PHY device according to embodiment 1, wherein the transmitter is configured to modulate the outbound data using Pulse-Amplitude Modulation (PAM) to produce a PAM signal, and to filter the PAM signal with a High-Pass Filter (HPF).
Embodiment 6. The Ethernet PHY device according to embodiment 1, wherein the receiver is configured to demodulate the inbound signal using a zero-disparity decoder.
Embodiment 7. An Ethernet physical layer (PHY) device for use in an automotive network, the Ethernet PHY device comprising:
   a cable interface, configured to connect to an Ethernet cable;
   a receiver, configured to receive, from the Ethernet cable via the cable interface, an inbound signal that is modulated with a zero-disparity modulation at a first data rate, and to demodulate the inbound signal to produce inbound data; and
   a transmitter, configured to generate an outbound signal by modulating outbound data at a second data rate that is lower than the first data rate, the outbound signal at least partially overlapping the inbound signal in spectrum, and to transmit the outbound signal to the Ethernet cable via the cable interface.
Embodiment 8. The Ethernet PHY device according to embodiment 7, wherein the receiver is configured to receive, in the inbound data, sensor data originating from one or more sensors, and wherein the transmitter is configured to transmit, in the outbound data, control data for controlling the one or more sensors.
Embodiment 9. The Ethernet PHY device according to embodiment 7, wherein the receiver is configured to demodulate the inbound signal using a bipolar Non-Return-to-Zero (NRZ) decoder.
Embodiment 10. The Ethernet PHY device according to embodiment 7, wherein the receiver is configured to demodulate the inbound signal using a Manchester-code decoder.
Embodiment 11. The Ethernet PHY device according to embodiment 7, wherein the receiver is configured to demodulate the inbound signal using a Pulse-Amplitude Modulation (PAM) decoder.
Embodiment 12. The Ethernet PHY device according to embodiment 7, wherein the transmitter is configured to modulate the outbound data with an outbound zero-disparity modulation.
Embodiment 13. A method for communication in an Ethernet physical layer (PHY) device in an automotive network, the method comprising:
   generating an outbound signal by modulating outbound data with a zero-disparity modulation at a first data rate, and transmitting the outbound signal to an Ethernet cable; and
   receiving, from the Ethernet cable, an inbound signal having a second data rate that is lower than the first data rate, the inbound signal at least partially overlapping the outbound signal in spectrum, and demodulating the inbound signal to produce inbound data.
Embodiment 14. The method for communication according to embodiment 13, wherein generating the outbound signal comprises obtaining the outbound data from one or more sensors, and wherein receiving the inbound signal comprises receiving, in the inbound signal, control data for controlling the one or more sensors.
Embodiment 15. The method for communication according to embodiment 13, wherein generating the outbound signal comprises modulating the outbound data using bipolar Non-Return-to-Zero (NRZ) modulation.
Embodiment 16. The method for communication according to embodiment 13, wherein generating the outbound signal comprises modulating the outbound data using Manchester-code modulation.
Embodiment 17. The method for communication according to embodiment 13, wherein generating the outbound signal comprises modulating the outbound data using Pulse-Amplitude Modulation (PAM) to produce a PAM signal, and filtering the PAM signal with a High-Pass Filter (HPF).
Embodiment 18. The method for communication according to embodiment 13, wherein demodulating the inbound signal comprises applying a zero-disparity decoder.
Embodiment 19. A method for communication in an Ethernet physical layer (PHY) device in an automotive network, the method comprising:
   receiving, from an Ethernet cable, an inbound signal that is modulated with a zero-disparity modulation at a first data rate, and demodulating the inbound signal to produce inbound data; and
   generating an outbound signal by modulating outbound data at a second data rate that is lower than the first data rate, the outbound signal at least partially overlapping the inbound signal in spectrum, and transmitting the outbound signal to the Ethernet cable.
Embodiment 20. The method for communication according to embodiment 19, wherein receiving the inbound signal comprises receiving, in the inbound data, sensor data originating from one or more sensors, and wherein transmitting the outbound signal comprises transmitting, in the outbound data, control data for controlling the one or more sensors.

## Claims

1. An Ethernet physical layer (PHY) device for use in an automotive network, the Ethernet PHY device comprising:
a cable interface, configured to connect to an Ethernet cable;
a transmitter, configured to generate an outbound signal by modulating outbound data with a zero-disparity modulation at a first data rate, and to transmit the outbound signal to the Ethernet cable via the cable interface; and
a receiver, configured to receive, from the Ethernet cable via the cable interface, an inbound signal having a second data rate that is lower than the first data rate, the inbound signal at least partially overlapping the outbound signal in spectrum, and to demodulate the inbound signal to produce inbound data.

2. The Ethernet PHY device according to claim 1, wherein the transmitter is configured to obtain the outbound data from one or more sensors, and wherein the receiver is configured to receive, in the inbound signal, control data for controlling the one or more sensors.

3. The Ethernet PHY device according to claim 1 or 2, wherein the transmitter is configured to modulate the outbound data using bipolar Non-Return-to-Zero (NRZ) modulation; or wherein the transmitter is configured to modulate the outbound data using Manchester-code modulation.

4. The Ethernet PHY device according to one of claims 1 - 3, wherein the transmitter is configured to modulate the outbound data using Pulse-Amplitude Modulation (PAM) to produce a PAM signal, and to filter the PAM signal with a High-Pass Filter (HPF).

5. The Ethernet PHY device according to one of claims 1 - 4, wherein the receiver is configured to demodulate the inbound signal using a zero-disparity decoder.

6. An Ethernet physical layer (PHY) device for use in an automotive network, the Ethernet PHY device comprising:
a cable interface, configured to connect to an Ethernet cable;
a receiver, configured to receive, from the Ethernet cable via the cable interface, an inbound signal that is modulated with a zero-disparity modulation at a first data rate, and to demodulate the inbound signal to produce inbound data; and
a transmitter, configured to generate an outbound signal by modulating outbound data at a second data rate that is lower than the first data rate, the outbound signal at least partially overlapping the inbound signal in spectrum, and to transmit the outbound signal to the Ethernet cable via the cable interface.

7. The Ethernet PHY device according to claim 6, wherein the receiver is configured to receive, in the inbound data, sensor data originating from one or more sensors, and wherein the transmitter is configured to transmit, in the outbound data, control data for controlling the one or more sensors.

8. The Ethernet PHY device according to claim 6 or 7, wherein the receiver is configured to demodulate the inbound signal using a bipolar Non-Return-to-Zero (NRZ) decoder; or
wherein the receiver is configured to demodulate the inbound signal using a Manchester-code decoder; or
wherein the receiver is configured to demodulate the inbound signal using a Pulse-Amplitude Modulation (PAM) decoder.

9. The Ethernet PHY device according to one of claims 6 - 8, wherein the transmitter is configured to modulate the outbound data with an outbound zero-disparity modulation.

10. A method for communication in an Ethernet physical layer (PHY) device in an automotive network, the method comprising:
generating an outbound signal by modulating outbound data with a zero-disparity modulation at a first data rate, and transmitting the outbound signal to an Ethernet cable; and
receiving, from the Ethernet cable, an inbound signal having a second data rate that is lower than the first data rate, the inbound signal at least partially overlapping the outbound signal in spectrum, and demodulating the inbound signal to produce inbound data.

11. The method for communication according to claim 10, wherein generating the outbound signal comprises obtaining the outbound data from one or more sensors, and wherein receiving the inbound signal comprises receiving, in the inbound signal, control data for controlling the one or more sensors.

12. The method for communication according to claim 10 or 11, wherein generating the outbound signal comprises modulating the outbound data using bipolar Non-Return-to-Zero (NRZ) modulation.

13. The method for communication according to one of claims 10 - 12, wherein generating the outbound signal comprises modulating the outbound data using Manchester-code modulation; or
wherein generating the outbound signal comprises modulating the outbound data using Pulse-Amplitude Modulation (PAM) to produce a PAM signal, and filtering the PAM signal with a High-Pass Filter (HPF); or
wherein demodulating the inbound signal comprises applying a zero-disparity decoder.

14. A method for communication in an Ethernet physical layer (PHY) device in an automotive network, the method comprising:
receiving, from an Ethernet cable, an inbound signal that is modulated with a zero-disparity modulation at a first data rate, and demodulating the inbound signal to produce inbound data; and
generating an outbound signal by modulating outbound data at a second data rate that is lower than the first data rate, the outbound signal at least partially overlapping the inbound signal in spectrum, and transmitting the outbound signal to the Ethernet cable.

15. The method for communication according to claim 14, wherein receiving the inbound signal comprises receiving, in the inbound data, sensor data originating from one or more sensors, and wherein transmitting the outbound signal comprises transmitting, in the outbound data, control data for controlling the one or more sensors.
